Europäisches Patentamt

European Patent Office

Office européen des brevets

(11) Publication number: **0 241 183 B1**

# EUROPEAN PATENT SPECIFICATION

(45) Date of publication of patent specification: **21.11.91**    (51) Int. Cl.⁵: **G10L 5/06**

(21) Application number: **87302604.1**

(22) Date of filing: **25.03.87**

(54) Speech recognition system.

(30) Priority: **25.03.86 JP 65028/86**

(43) Date of publication of application:
**14.10.87 Bulletin 87/42**

(45) Publication of the grant of the patent:
**21.11.91 Bulletin 91/47**

(84) Designated Contracting States:
**DE FR GB**

(56) References cited:

ICASSP 85 PROCEEDINGS OF THE IEEE IN-
TERNATIONAL CONFERENCE ON ACOUS-
TICS, SPEECH, AND SIGNAL PROCESSING,
Tampa, Florida, US, 26th - 29th March 1985,
vol. 1, pages 1-4, IEEE, New York, US; K.
SUGAWARA et al.: "Isolated word recogni-
tion using hidden markov models"

ICASSP 85 PROCEEDINGS OF THE IEEE IN-
TERNATIONAL CONFERENCE ON ACOUS-
TICS, SPEECH, AND SIGNAL PROCESSING,
Tampa, Florida, US, 26th - 29th March 1985,
vol. 1, pages 5-8, IEEE, New York, US; M.J.
RUSSELL et al.: "Explicit modelling of state
occupancy in hidden markov models for
automatic speech recognition"

(73) Proprietor: **International Business Machines
Corporation
Old Orchard Road
Armonk, N.Y. 10504(US)**

(72) Inventor: **Kaneko, Toyohisa
2-6-9 Higashiyama
Meguro-ku Tokyo-to(JP)**
Inventor: **Watanuki, Osaaki
348-8 Manpukuji Asao-ku
Kawasaki-shi Kanagawa-ken(JP)**

(74) Representative: **Atchley, Martin John Waldeg-
rave
IBM United Kingdom Limited Intellectual
Property Department Hursley Park
Winchester Hampshire SO21 2JN(GB)**

**Description**

The present invention relates to a speech recognition system employing a probabilistic technique and, more particularly, to a speech recognition system wherein speech recognition may be performed conveniently without deteriorating the recognition accuracy.

As a probabilistic technique for recognising items of speech, there is known a technique using probabilistic Markov models. A Markov model is a finite state device having a plurality of states and the ability to undergo transitions between the states. For each transition the probability of occurrence is defined. Each transition results in the generation of a label and the probability of each of the labels being generated is also defined. The occurrence of a sequence of transitions results in the generation of a string of labels. For example, such a probabilistic model can be provided for each word of an item of speech and its probability parameters can be established by training. During a speech recognition operation, a label string obtained from an unknown input item of speech is matched with each probabilistic model, and the word associated with a probabilistic model having highest probability of generating the same label string is determined as a recognition result. Such a technique is described, for example, in an article by F. Jelinek, "Continuous Speech Recognition by Statistical Methods," Proceedings of the IEEE, Vol. 64, 1976, pp. 532 - 556.

Speech recognition operation using Markov models, however, requires a great amount of training data for establishing the probability parameters by training and also a significant amount of calculating time for training.

Other techniques in the prior art include the following:

(1) Article by T. Kaneko, et. al., "Large Vocabulary Isolated Word Recognition with Linear and DP Matching," Proc. 1983 Spring Conference of Acoustical Society of Japan, March 1983, pp. 151 - 152.

(2) Article by T. Kaneko, et. al., "A Hierarchical Decision Approach to Large Vocabulary Discrete Utterance Recognition," - IEEE Trans. on ASSP, Vol. ASSP-31, No. 5, October 1983. (3) Article by H. Fujisaki, et. al., "High-Speed Processing and Speaker Adaptation in Automatic Recognition of Spoken Words," Trans. of the Committee on Speech Recognition, The Acoustical Society of Japan, S80-19, June 1980, pp. 148 - 155.

(4) Article by D. K. Burton, et. al., "A Generalization of Isolated Word Recognition Using Vector Quantization," ICASSP 83, pp. 1021 -1024.

These articles disclose dividing a word into blocks along a time axis. However, they describe nothing about obtaining label output probabilities in each of the blocks and performing probabilistic speech recognition based on the label output probabilities in each of the blocks.

The object of the present invention is to provide an improved speech recognition system employing a probabilistic technique.

The present invention relates to a speech recognition system of the type which comprises means for storing selected parameters for each of a plurality of words in a vocabulary to be used for recognition of an input item of speech. The stored parameters include for each vocabulary word a set of labels each representing a feature of the vocabulary word occurring at a respective segmentation point in the vocabulary word, and the probability of the feature associated with each label occurring at a segmentation point in a word. The recognition system also comprises comparison means for comparing parameters of each unknown word in an input item of speech with the stored parameters, and indication means responsive to the result of the comparison operation for indicating which of the plurality of vocabulary words most closely resembles each unknown input word.

According to the invention the speech recognition system is characterised in that the comparison means comprises means for determining the length of each unknown word, means for segmenting each unknown word, means for normalising the length of each unknown word by reducing to a predetermined number the number of labels each representing a feature occurring at a respective segmentation point in the unknown word, and means for comparing the stored sets of parameters with the set of labels for each unknown word. The present invention also provides a method as claimed in claim 2.

In order that the invention may be more readily understood an embodiment will now be described with reference to the accompanying drawings, in which:

Fig. 1 is a block diagram illustrating a speech recognition system in accordance with the present invention,

Figs. 2A and 2B are flow charts for explaining the operation of a training unit included in the system illustrated in Fig. 1,

Fig. 3 is a flow chart for explaining the operation of a recognition unit 9 included in the system illustrated in Fig. 1, and

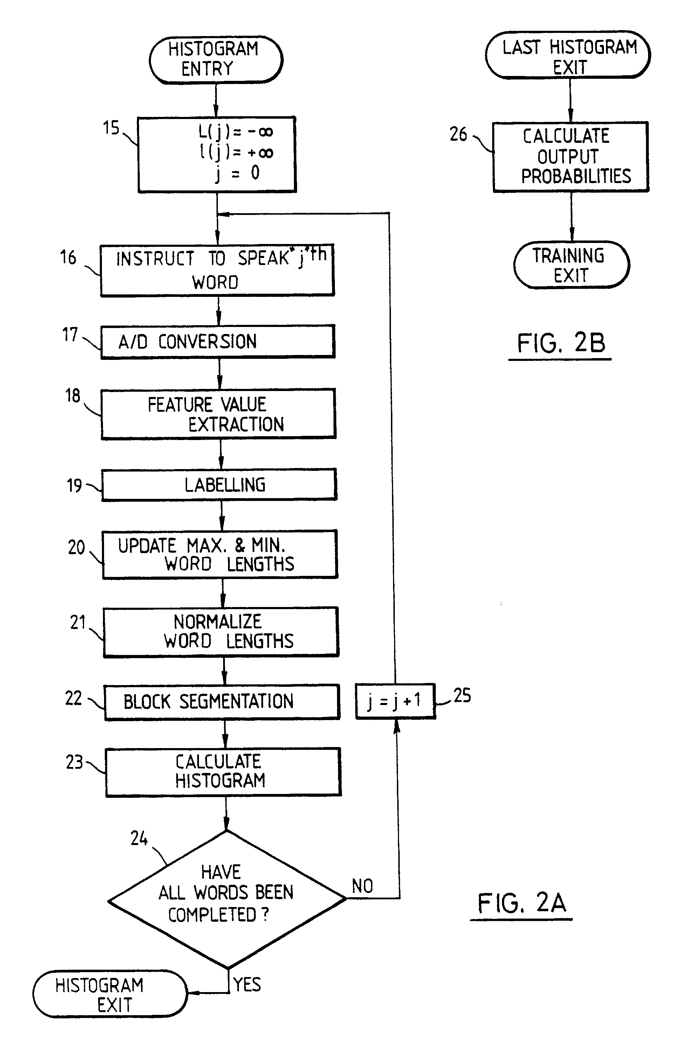

Figs. 4, 5, 6, and 7 are diagrams for explaining the operation of certain of the functions illustrated in the

EP 0 241 183 B1

flow charts in Fig. 2A and 2B.

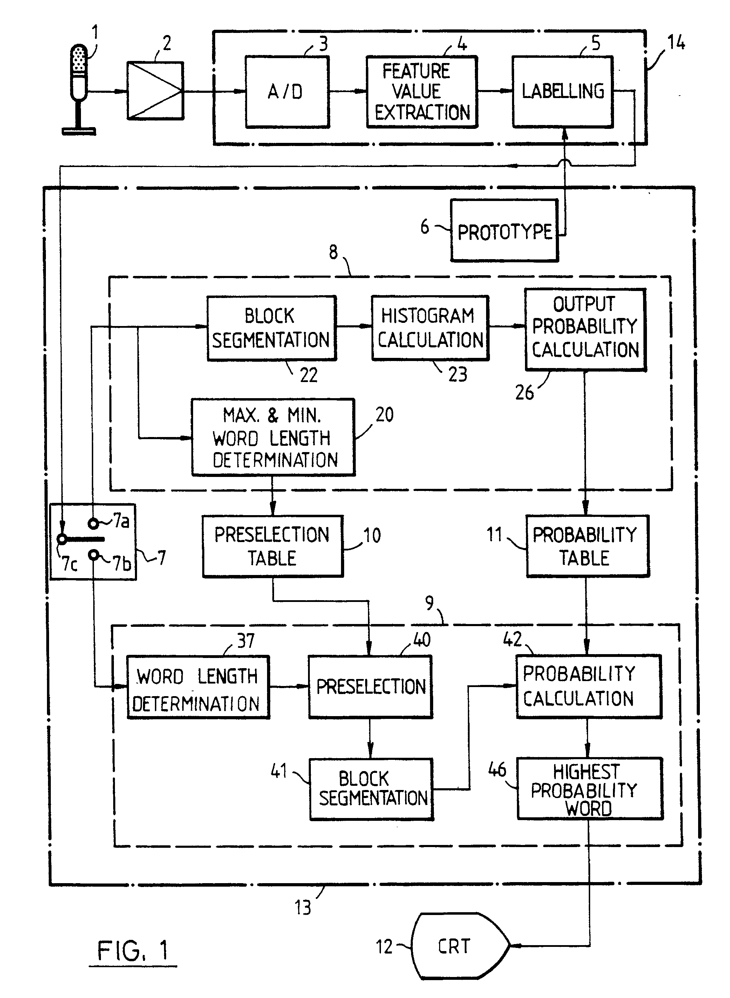

In Fig. 1, illustrating a speech recognition system according to the invention as a whole, items of speech are supplied to an analog/digital (A/D) converter 3 through a microphone 1 and an amplifier 2. The items of speech can be training speech data or unknown speech data. The A/D converter 3 converts the item of speech into digital data by repeatedly sampling the items of speech at a frequency of 8 KHz. The digital data is supplied to a feature value extraction unit 4 to be converted into feature values by using the LPC analysis. A new feature value is generated every 14 nsec and is supplied to a labelling unit 5. The labelling unit 5 performs labelling with reference to a prototype dictionary 6. A label alphabet $\{f_i\}$ and prototypes of feature values corresponding thereto are stored in the prototype dictionary 6, and the label $f_i$ having a prototype which is nearest to each input feature value is determined and produced as an output from the labelling unit 5. The number of elements of the label alphabet is 32, for example, and a prototype of a label may be obtained by sampling, at random, feature values in an item of speech spoken for 20 sec.

Each label $f_i$ from the labelling unit 5 is supplied either to a training unit 8 or to a recognition unit 9 through a switching means 7. The input terminal 7c of the switching means 7 is connected either to one output terminal 7a associated with the training unit 8 during training or to another output terminal 7b associated with the recognition unit 9 during recognition.

The training unit 8 processes the label string obtained from items of speech representing training speech data and establishes a preselection table 10 and a probability table 11. The preselection table 10 stores the maximum length $L(j)$ and the minimum length $l(j)$ for the words in the vocabulary for use in a subsequent recognition operation. The probability table 11 stores the probability $p$ $(i, j, k)$ of each of the labels $f_i$ occurring in each of blocks $b_{jk}$ obtained by equally dividing a word $w_j$ in a vocabulary for recognition. In fact, for convenience of calculations, the value of log p is stored in the probability table 11, instead of the value of the probability p itself.

The recognition unit 9 processes a label string obtained from an item of speech of an unknown word by referring to the preselection table 10 and the probability table 11, and performs a recognition operation in two stages, to be stated later, to obtain a recognition result. The recognition result is displayed on a CRT 12, for example.

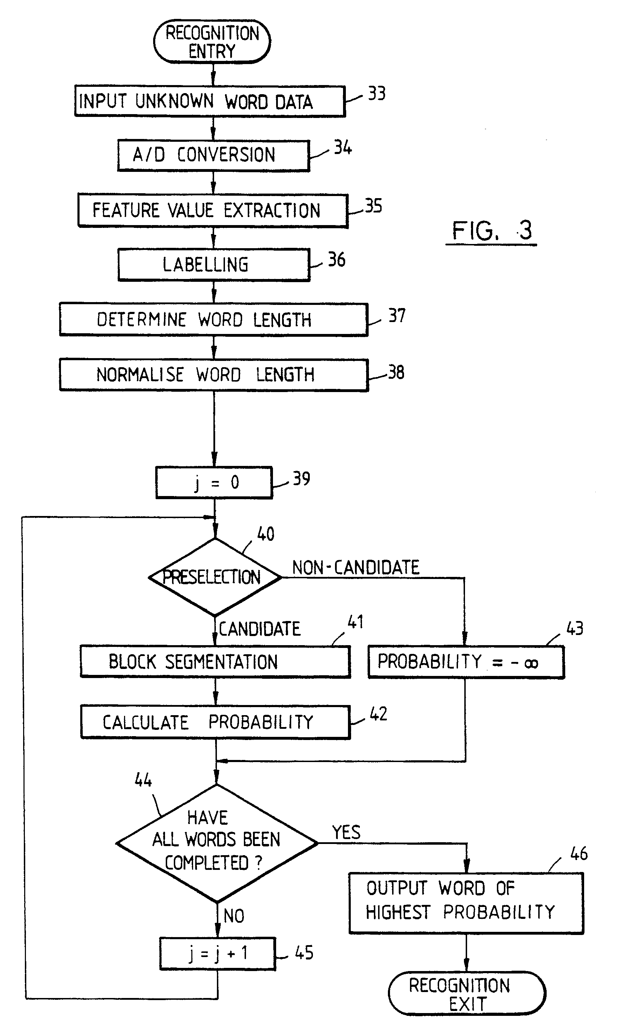

The components in block 13 shown with a one-dot chain line may be implemented using software in a personal computer, e.g., a PCXT manufactured by International Business Machines Corporation. These components may alternatively be implemented using hardware by adopting a configuration consisting of the blocks shown with solid lines within block 13 shown with the one-dot chain line. These blocks correspond respectively to the functions of the software, which will be explained later in detail in the explanation of steps corresponding thereto with reference to Figs. 2A, 2B and 3. For ease of understanding, the blocks shown with solid lines in Fig. 1 are illustrated with the same numbers as those of the steps corresponding thereto shown in Figs. 2A, 2B and 3.

The components in block 14 shown with a one-dot chain line may be implemented by a signal processing board added to a personal computer.

Training of the recognition system will now be explained with reference to Figs. 2A and 2B. The system, which is for unspecified speakers, performs training based on items of speech spoken by a plurality of different training speakers. The speakers sequentially input training speech data. In a particular embodiment, a speaker inputs a plurality of items of speech, for example three items of speech, for each of the words $w_j$ in the vocabulary to be used for recognition.

In training, a histogram h $(i, j, k)$ for each label $f_i$ in the training speech data is obtained first in each of the blocks $b_{jk}$ in the word $w_j$. Fig. 2A illustrates a procedure for generating the histograms h $(i, j, k)$. In Fig. 2A, at the beginning, the maximum word length $L(j)$, the minimum word length $l(j)$, and j for each of the words $w_j$ are initialised (Step 15). They are set to $L(j) = -\infty$, $l(j) = +\infty$, and j = 0, respectively. Then, the CRT 12 (Fig. 1) displays an instruction to the speaker to speak the word $w_j$ three times (Step 16), and the speaker responds thereto. The A/D conversion, feature value extraction, and labelling are sequentially performed on the items of speech (Steps 17 -19). Then, the maximum word length $L(j)$ and the minimum word length $l(j)$ are updated, if necessary (Step 20). In the event the longest one of these three items of speech is longer than the maximum word length $L(j)$, the value is set to a new maximum word length $L(j)$. Similarly, in the event the shortest one of these three items of speech is shorter than the minimum word length $l(j)$, the value is set to a new minimum word length $l(j)$.

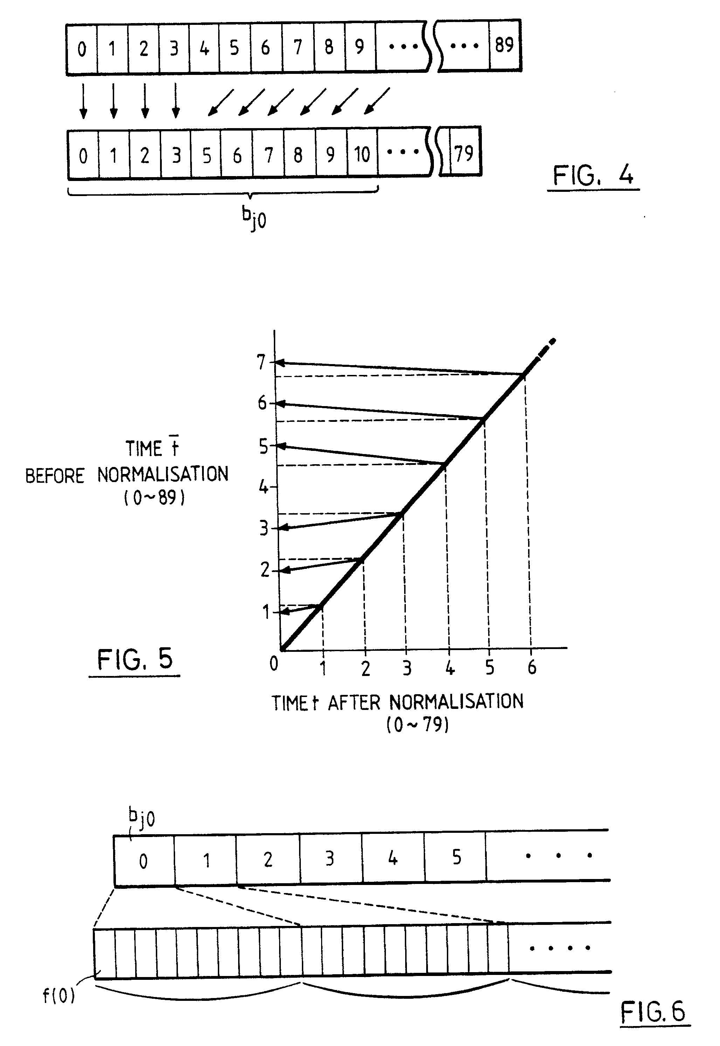

Next, normalisation of the word length and a block segmentation will be performed for each of the items of speech (Steps 21 and 22). In the normalisation of the word length, the number of labels included in one word is set to a predetermined number $N_f$ ( $= N_0 \times N_b$, where $N_0$ is a positive integer and $N_b$ is the number of blocks $b_{jk}$), so that the block segmentation can be performed easily. The block segmentation may be performed by using a unit smaller than a label. In that case, however, the calculation of histograms

3

will be more complicated. In a particular example, the normalisation is performed by setting the number of blocks, $N_b$, to 8 and the positive integer $N_0$ to 10, so that one word includes 80 labels. This is illustrated in Fig. 4. The example illustrated in Fig. 4 shows a case where a word before the normalisation of the word length includes 90 labels. As seen from Fig. 4, some of the labels existing before the normalisation operation may often be skipped. In a particular example, a label $f(t)$ at a time $t$ after the normalisation operation ($t = 0 - 79$ ; the time units are intervals at which labels are produced) is equal to a label $f(\bar{t})$ at a time $\bar{t}$ before the normalisation operation, assuming $\bar{t} = {}_L(t \times 90 \,/\, 80) + 0.5_J$ , where ${}_L\alpha_J$ indicates that the figures of $\alpha$ below the decimal point should be omitted. The above formula may typically be illustrated as in Fig. 5. Generally, the formula may be expressed as $\bar{t} = {}_L(t \times \bar{N}_f \,/\, N_f) + 0.5_J$, where $N_f$ is the number of labels after the normalisation operation and $\bar{N}_f$ is the number of labels before the normalisation. In Fig. 4, $\bar{N}_f = 90$, and $\bar{N}_f > N_f$, which may be $\bar{N}_f \leqq N_f$.

In the block segmentation operation, each of the items of speech after the normalisation operation is equally divided into blocks $b_{jk}$, as illustrated in Fig. 6.

These Steps 16 through 23 are performed for all of the words $w_j$ in the vocabulary to be used for recognition (Steps 24 and 25). The procedure of generating the histograms illustrated in Fig. 2A is shown for one speaker. By performing this procedure for a plurality of different speakers, it is possible to generate histograms $h(i, j, k)$ which are not biased to any particular speaker.

After having generated the histograms $h(i, j, k)$ which are not biased to any particular speaker as stated above, the histograms are normalised and the probability $p(i, j, k)$ of a feature having a label $f_i$ occurring in a block $b_{jk}$ in a word $w_j$ is calculated as illustrated in Fig. 2B (Step 26). This probability $p(i, j, k)$ is obtained according to the following formula.

$$p(i, j, k) = \frac{h(i, j, k)}{\sum_i h(i, j, k)}$$

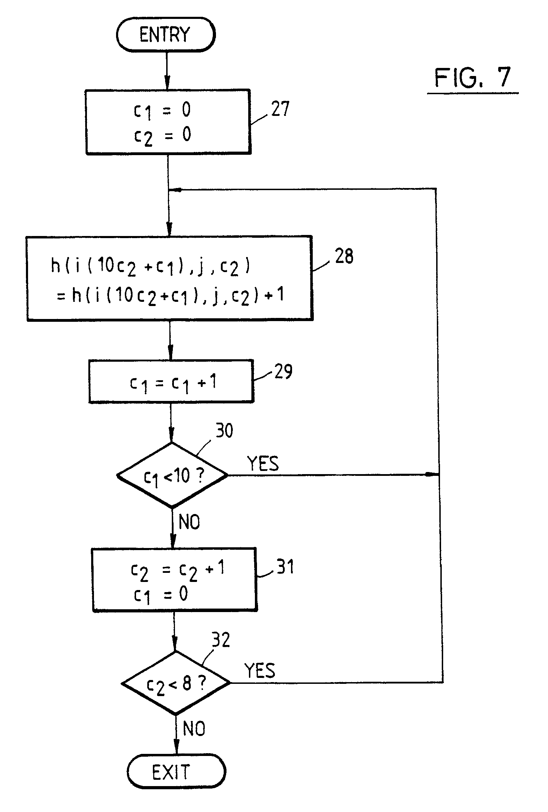

The block segmentation and the calculation of histograms in Steps 22 and 23, respectively, illustrated in Fig. 2A may be performed as illustrated in Fig. 7, for example. Fig. 7 shows a case where the number of blocks $b_{jk}$ is 8 and the number of labels $f_i$ in the block $b_{jk}$ is 10. In Fig. 7, $c_1$ and $c_2$ indicate the values of counters, each of which is set to 0 at the beginning (Step 27). The value of $c_1$ is incremented by one, each time a label occurs (Step 29), and is reset to 0 when the counter has reached 10 (Step 31). The value of $c_2$ is incremented by one, each time the value of $c_1$ is reset (Step 31). With the end of each of the blocks $b_{jk}$ and the end of each of the words being detected in Steps 30 and 32, respectively, the histograms $h(i(10c_2 + c_1), j, c_2)$ are incremented by one, every time $t = 10c_2 + c_1$. The $i(t)$ indicates the number of a label at the time $t$ ($t = 0 - 79$; the time units are intervals at which labels are produced).

Next, referring to Fig. 3, an explanation will be made as to how the speech recognition system illustrated in Fig. 1 is used for the recognition of an unknown item of speech.

In Fig. 3, when the data of an unknown word $x$ is input (Step 33), the A/D conversion, feature value extraction, and labelling are sequentially performed on the data as already described (Steps 34, 35, and 36). Then, the length of the unknown word $x$ is determined (Step 37) and used in the subsequent preselection Step 40. The length of the unknown word $x$ is normalised in the same manner as in Step 21 illustrated in Fig. 2A (Step 38).

In the preselection step 40, it is determined whether or a stored word $w_j$ satisfies the following formula in connection with an unknown word $x$, by referring to the preselection table 10 (Fig. 1).

$$l(j) \cdot (1 - \Delta) < \text{Length}(x) < L(j) \cdot (1 + \Delta)$$

where the Length $(x)$ denotes the length of the unknown word. The $\Delta$ is a small value, for example 0.2. If this formula is not satisfied, the probability is specified as $-\infty$, so that the stored word $w_j$ would be omitted from the $x$ candidates for the recognition result (Step 43). However, if the formula is satisfied, after the unknown word $x$ has been divided into the blocks $b_{jk}$, in the same manner as in Step 22 illustrated in Fig. 2A, the probability is calculated (step 42). The probability $LH(j)$ of the stored word $w_j$ being the unknown word $x$ may be obtained according to the following formula.

$$LH\ (j)\ =\ \overset{T}{\underset{t\ =\ 0}{\Sigma}}\ \log p\ (\ i(t),\ j(t),\ k)$$

All the Steps 40 through 43 are performed for all of the words $w_j$ in the input item of speech to be recognised (Steps 39, 44, and 45) and the probabilities LH (j) of all of the stored words $w_j$ are obtained. Then, the stored word having the highest probability LH (j) is output as the recognition result (Step 46).

It should be understood that a speech recognition system according to the present invention is not limited to the above described embodiment, but various changes in form and details may be made therein without departing from the spirit and scope of the invention. For example, while in the above embodiment the recognition system has been implemented by software in a personal computer, it can, of course, be implemented by hardware.

Further, while the speech recognition system described has been applied to speech recognition for unspecified speakers, such as used in banking systems, subway information systems and the like, it may also be applied to systems for specified speakers.

Further, smoothing may be performed in the speech recognition system described above in order to improve the recognition accuracy. For example, in the event a label output probability is 0, it may be replaced with a value of the order of $\epsilon = 10^{-7}$, or the histograms may be recalculated in consideration of confusions between labels.

As explained, in the speech recognition system described above label output probabilities can be expressed quite simply. Therefore, the recognition system is able to be trained conveniently and reduce calculations during use for speech recognition. Further, since errors due to fluctuations in time can be absorbed by adopting the probabilistic expressions, recognition errors can be suppressed.

## Claims

1. A speech recognition system comprising

   storage means (10,11) for storing selected parameters for each of a plurality of words in a vocabulary to be used for recognition of an input item of speech, said stored parameters including for each vocabulary word a set of labels each representing a feature of said vocabulary word occurring at a respective segmentation point in said vocabulary word, and the probability of the feature associated with each label occurring at a segmentation point in a word,

   comparison means (42) for comparing parameters of each unknown word in an input item of speech with said stored parameters, and

   indication means (12, 46) responsive to the result of said comparison operation for indicating which of said plurality of vocabulary words most closely resembles each unknown input word,

   characterised in that

   said comparison means comprises

   means for determining the length of each unknown word,

   means for segmenting each unknown word,

   means for normalising the length of each unknown word by reducing to a predetermined number the number of labels each representing a feature occurring at a respective segmentation point in said unknown word, and

   means for comparing said stored sets of parameters with the set of labels for each unknown word.

2. A method of speech recognition comprising

storing selected parameters for each of a plurality of words in a vocabulary to be used for recognition of an input item of speech, said stored parameters including for each vocabulary word a set of labels each representing a feature of said vocabulary word occurring at a respective segmentation point in said vocabulary word, and the probability of the feature associated with each label occurring at a segmentation point in a word,

comparing parameters of each unknown word in an input item of speech with said stored parameters, and

responsive to the result of said comparison operation indicating which of said plurality of vocabulary words most closely resembles each unknown input word,

characterised in that said comparison operation comprises

determining the length of each unknown word,

segmenting each unknown word,

normalising the length of each unknown word by reducing to a predetermined number the number of labels each representing a feature occurring at a respective segmentation point in said unknown word, and

comparing said stored sets of parameters with the set of labels for each unknown word.

## Revendications

1. Système de reconnaissance de la parole comprenant :
   des moyens de mémoire (10,11) pour stocker des paramètres choisis pour chacun d'une pluralité de mots dans un vocabulaire à utiliser pour la reconnaissance d'un élément de parole d'entrée, lesdits paramètres mémorisés incluant, pour chaque mot du vocabulaire, un ensemble d'étiquettes représentant chacune une particularité dudit mot de vocabulaire apparaissant à un point de segmentation respectif dudit mot de vocabulaire, et la probabilité d'apparition de la particularité associée à chaque étiquette, à un point de segmentation d'un mot,
   des moyens de comparaison (42) pour comparer les paramètres de chaque mot inconnu dans un élément de parole d'entrée avec lesdits paramètres mémorisés, et
   des moyens d'indication (12,46) qui répondent au résultat de ladite opération de comparaison de manière à indiquer le mot de ladite pluralité de mots de vocabulaire qui ressemble le plus étroitement à chaque mot d'entrée inconnu,
   caractérisé en ce que lesdits moyens de comparaison comprennent
   des moyens de détermination de la longueur de chaque mot inconnu,
   des moyens de segmentation de chaque mot inconnu,
   des moyens de normalisation de la longueur de chaque mot inconnu, par réduction à un nombre prédéterminé du nombre d'étiquettes représentant chacune une particularité apparaissant à un point de segmentation respectif dudit mot inconnu, et
   des moyens de comparaison desdits ensembles de paramètres mémorisés avec l'ensemble d'étiquettes pour chaque mot inconnu.

2. Méthode de reconnaissance de la parole comprenant
   la mémorisation de paramètres choisis pour chacun d'une pluralité de mots d'un vocabulaire à utiliser pour la reconnaissance d'un élément de parole d'entrée, lesdits paramètres mémorisés incluant, pour chaque mot de vocabulaire, un ensemble d'étiquettes représentant chacune une particularité dudit mot de vocabulaire apparaissant à un point de segmentation respectif dudit mot de vocabulaire, et la probabilité d'apparition de la particularité associée à chaque étiquette, à un point de segmentation d'un mot,
   la comparaison des paramètres de chaque mot inconnu d'un élément de parole d'entrée avec lesdits paramètres mémorisés,et
   en réponse au résultat de ladite opération de comparaison, l'indication du mot de ladite pluralité de mots de vocabulaire qui ressemble le plus étroitement à chaque mot d'entrée inconnu,

EP 0 241 183 B1

caractérisée en ce que ladite opération de comparaison comprend

la détermination de la longueur de chaque mot inconnu,

la segmentation de chaque mot inconnu,

la normalisation de la longueur de chaque mot inconnu par réduction, à un nombre prédéterminé, du nombre d'étiquettes représentant chacune une particularité apparaissant à un point de segmentation respectif dudit mot inconnu, et

la comparaison desdits ensembles de paramètres mémorisés avec l'ensemble d'étiquettes pour chaque mot inconnu.

**Patentansprüche**

1. System zur Spracherkennung, das folgendes aufweist:

Speichermittel (10, 11) zum Speichern ausgewählter Parameter für jedes einer Mehrzahl von Wörtern in einem Vokabular, das zur Erkennung eines Sprache-Eingangselementes verwendet werden soll, wobei die gespeicherten Parameter für jedes Vokabular-Wort aufweisen: einen Satz von Markierungen, bei denen jede ein Merkmal des Vokabular-Wortes repräsentiert, das bei einer entsprechenden Segementierungsstelle in dem Vokabular-Wort auftritt und die Wahrscheinlichkeit des jeder Markierung zugeordenten Merkmales , das bei einer Segmentierungsstellen in einem Wort auftritt

ein Vergleichsmittel (42) zum Vergleichen von Parametern jedes unbekannten Wortes in einem Sprache-Eingangselement mit den gespeicherten Parametern und

Anzeigemittel (12, 46), die auf das Ergebnis des Vergleichsarbeitsganges ansprechen, um anzuzeigen, welches aus der Mehrzahl von Vokabular-Wörtern am ähnlichsten jedem unbekannten Eingangswort ist,

dadurch gekennzeichnet, daß

das Vergleichsmittel aufweist:

Mittel zum Bestimmen der Länge jedes unbekannten Wortes,

Mittel zum Segmentieren jedes unbekannten Wortes,

Mittel zum Normieren der Länge jedes unbekannten Wortes durch Verringern der Anzahl von Markierungen, bei denen jede ein bei einer entsprechenden Segementierungsstelle in dem unbekannten Wort auftretendes Merkmal repräsentiert, auf eine vorbestimmte Anzahl und

Mittel zum Vergleichen der gespeicherten Sätze von Parametern mit den Satz von Markierungen für jedes unbekannte Wort.

2. Verfahren zur Spracherkennung, das folgendes umfaßt:

Speichern ausgewälter Parameter für jedes einer Mehrzahl von Wörtern in einem Vokabular, das zur Erkennung eines Sprache-Eingangselementes verwendet werden soll, wobei die gespeicherten Parameter für jedes Vokabular-Wort aufweisen: einen Satz von Markierungen, bei denen jede ein Merkmal des Vokabular-Wortes repräsentiert, das bei einer entsprechenden Segmentierungsstelle in dem Vokabular-Wort auftritt und die Wahrscheinlichkeit des jeder Markierung zugeordneten Merkmales, das bei einer Segmentierungsstelle in einem Wort auftritt,

Vergleichen von Parametern jedes unbekannten Wortes in einem Sprache-Eingangselement mit den gespeicherten Parametern und

Anzeigen, welches aus der Mehrzahl von Vokabular-Wörtern am ähnlichsten jedem unbekannten Eingangswort ist , entsprechend dem Ergebnis des Vergleichsarbeitsganges,

dadurch gekennzeichnet, daß

7

der Vergleichsarbeitsgang umfaßt:

Bestimmen der Länge jedes unbekannten Wortes,

Segmentieren jedes unbekannten Wortes,

Normieren der Länge jedes unbekannten Wortes durch Verringern der Anzahl von Markierungen, bei denen jede bei einer entsprechenden Segementierungsstelle in dem unbekannten Wort auftretendes Merkmal repräsentiert, auf eine vorbestimmte Anzahl und

Vergleichen der gespeicherten Sätze von Parametern mit dem Satz von Markierungen für jedes unbekannte Wort.

FIG. 1

FIG. 2A

FIG. 2B

## FIG. 3

RECOGNITION
ENTRY

INPUT UNKNOWN WORD DATA — 33

A/D CONVERSION — 34

FEATURE VALUE EXTRACTION — 35

LABELLING — 36

DETERMINE WORD LENGTH — 37

NORMALISE WORD LENGTH — 38

$j = 0$ — 39

40 — PRESELECTION — NON-CANDIDATE

CANDIDATE — 41

BLOCK SEGMENTATION — 41

PROBABILITY = $-\infty$ — 43

CALCULATE PROBABILITY — 42

44 — HAVE ALL WORDS BEEN COMPLETED ? — YES

OUTPUT WORD OF HIGHEST PROBABILITY — 46

NO

$j = j + 1$ — 45

RECOGNITION
EXIT

11

FIG. 4

TIME $\overline{t}$
BEFORE NORMALISATION
(0~89)

FIG. 5

TIME $t$ AFTER NORMALISATION
(0~79)

FIG. 6

ENTRY

## FIG. 7

$c_1 = 0$
$c_2 = 0$ — 27

$h(i(10c_2 + c_1), j, c_2)$
$= h(i(10c_2 + c_1), j, c_2) + 1$ — 28

$c_1 = c_1 + 1$ — 29

30
$c_1 < 10$ ? — YES

NO

$c_2 = c_2 + 1$
$c_1 = 0$ — 31

32
$c_2 < 8$ ? — YES

NO

EXIT